# EUROPÄISCHE PATENTSCHRIFT

(11) **EP 1 243 395 B1**
(45) Veröffentlichungstag und Bekanntmachung des Hinweises auf die Patenterteilung: **10.05.2006**
(21) Anmeldenummer: 02006240.2
(22) Anmeldetag: 20.03.2002
(51) Int. Cl.: B29C 45/17

(54) **Verfahren zur Herstellung von Kunststoffformteilen mit einem Hohlraum nach dem Spritzgiessverfahren**
Process for manufacturing of injection moulded products with a hollow section by injection moulding
Technique de moulage par injection de pièces en matière plastique présentant une partie creuse

(30) Priorität: 23.03.2001 DE 10114419
(43) Veröffentlichungstag der Anmeldung: 25.09.2002
(73) Patentinhaber: Battenfeld GmbH, D-58540 Meinerzhagen (DE)
(72) Erfinder: Wülfrath, Marc, Dipl.-Ing., 58566 Kierspe (DE)

(56) Entgegenhaltungen:
- DE-A- 2 800 482
- DE-A- 19 613 134
- DE-A- 19 903 682
- GB-A- 2 322 094
- US-A- 5 139 714
- US-A- 5 928 677
- PATENT ABSTRACTS OF JAPAN vol. 1998, no. 11, 30. September 1998 (1998-09-30) -& JP 10 156856 A (BEISHIN KOGYO KK), 16. Juni 1998 (1998-06-16)
- PATENT ABSTRACTS OF JAPAN vol. 018, no. 025 (M-1542), 14. Januar 1994 (1994-01-14) -& JP 05 261750 A (JAPAN STEEL WORKS LTD:THE), 12. Oktober 1993 (1993-10-12) -& DATABASE WPI Week 199345 Derwent Publications Ltd., London, GB; AN 1993-356797 XP002203665 & JP 05 261750 A
- MICHAELI W ET AL: "GAS ODER WASSER? SPRITZGIESSEN VON HOHLKOERPERN DURCH FLUIDINJEKTION" , KUNSTSTOFFE, CARL HANSER VERLAG. MUNCHEN, DE, VOL. 9, NR. 89, PAGE(S) 56-58,60,62 XP000958427 ISSN: 0023-5563 * Seite 56, Absatz 3 * * Seite 57, Absätze 1,2 *

## Beschreibung

Die Erfindung betrifft ein Verfahren zum Spritzgießen von mindestens einen Hohlraum aufweisenden Formteilen aus Kunststoffmaterial, nach dem Oberbegriff des Anspruchs 1.

Das gattungsgemäße Verfahren ist als Gas-Innendruck-Verfahren bei der Fertigung von Formteilen aus thermoplastischem Kunststoff bekannt und weit verbreitet. Ein solches Verfahren ist beispielsweise aus der **US 4,101 617** bekannt. Dabei wird in die noch schmelzflüssige Kunststoffschmelze ein Fluid unter Druck eingebracht. Durch den so im Inneren der Schmelze erzeugten Druck wird die Schmelze gegen die Kavitätswand des Spritzgießwerkzeugs gepreßt; Einfallstellen infolge Volumenkontraktion beim Abkühlen werden so vermieden.

Als Fluid, das unter Druck in die Schmelze injiziert wird, wird üblicherweise Stickstoffgas verwendet. Es hat den Vorteil, daß es als inertes Gas keiner chemischen Reaktion in der heißen Schmelze unterliegt. Dabei wird der Nachteil in Kauf genommen, daß der Stickstoff meist recht teuer in der Herstellung ist. Entweder muß die Spritzgießvorrichtung mit Stickstoff aus Flaschen versorgt werden oder das Gas wird vor Ort - bei größerem Gasbedarf - beispielsweise mittels Molekularfilter gewonnen.

Die immer weiter steigenden Anforderungen an die Wirtschaftlichkeit des Prozesses bedingen immer kürzere Spritzgießzyklen bei möglichst steigender Qualität der zu fertigenden Formteile. Um die kürzeren Zyklen zu erreichen, sind verschiedene Ansätze gemacht worden:

Die **EP-0 400 308 B1** schlägt vor, nach der Gasinjektion in die Schmelze das Gas an einer von der Einspritzstelle entfernten Stelle wieder austreten zu lassen; anschließend wird eine Zirkulation des Gases durch den geschaffenen Hohlraum bewerkstelligt. In den Gaskreislauf ist ein Kühler integriert. Damit soll ein schnellerer Abkühlungsprozeß der Schmelze erfolgen, da gekühltes Gas im geschlossenen Kreislauf zugeführt wird.

Die IP 10 156856 A beschreibt die Eizeugung eines hohlen Kunststoffteils, bei dem in den in die Kavität eingebrachten kunststoff eine bestimmte Menge Wasser eingebracht wird. Die Ausformung des Formteils und somit die vollständige Anpressung der Schmelze an die Kavitätswandung erfolgt erst mittels der aus dem Wasser eintstandenen Wasserdampfer.

Die **DE-42 19 915 A1** stellt indes darauf ab, gekühltes Gas einzusetzen, das in die Schmelze eingespritzt wird. Dabei ist namentlich vorgesehen, daß das Gas auf Temperaturen bis zu - 160 °C abgekühlt wird. Auf diese Weise soll das Kunststoffmaterial so schnell wie möglich abkühlen; die Zeitspanne vom Einspritzen der Schmelze ins Spritzgießwerkzeug bis zur Entformung wird damit reduziert.

Bei den vorbekannten Verfahren ist es nachteilhaft, daß zum einen nach wie vor teurer Stickstoff erforderlich ist und zum anderen trotz aller Maßnahmen aufgrund der beschränkten Wärmekapazität des Gases der Abkühlungseffekt begrenzt bleibt. Unabhängig davon kommt es aufgrund des starken Viskositätsunterschiedes zwischen Schmelze und Gas zu dem Problem, daß mitunter Fließmarkierungen an der Formteiloberfläche auftreten, die die Qualität des zu fertigenden Formteils negativ beeinflussen.

Der Erfindung liegt daher die **Aufgabe** zugrunde, das Spritzgießverfahren der gattungsgemäßen Art so weiterzuentwickeln, daß die genannten Nachteile vermieden werden. Das Verfahren soll es also möglich machen, ohne den Einsatz von teurem Stickstoff auszukommen. Des weiteren soll eine möglichst kurze Kühlzeit realisierbar sein, die den Spritzgießprozeß nennenswert verkürzt. Schließlich soll das Verfahren auch sicherstellen, daß ein möglichst homogener Fließverlauf der Schmelze in das Spritzgießwerkzeug erfolgt, so daß Umschaltmarkierungen möglichst vermieden werden können.

Diese Aufgabe wird in Verbindung mit dem Oberbegriff des Anspruchs 1 **dadurch gelöst**, daß nach Schritt b) die Formkavität wollständig durch die Flüssigkeit und die Kunstostoffschmelze gefüllt ist.

Der Kerngedanke der Erfindung stellt also darauf ab, daß als in die Schmelze zu injizierende Fluid eine Flüssigkeit mit hoher Wärmekapazität eingesetzt wird, wobei hierdurch erreicht wird, daß ein schneller Abkühlprozeß stattfindet, so daß die Zykluszeit des Spritzgießzyklus nennenswert reduziert werden kann. Es wird sich hier die hohe Wärmeaufnahme bei der Änderung des Aggregatzustandes zu Nutze gemacht, durch die zusätzlich der Innendruck erhöht wird.

Als Kunststoffmaterial ist hier jede Gruppe der Thermoplaste vorgesehen, egal ob diese mit Zusatzstoffen wie Glasfasern, chemischen oder physikalischen Treibmitteln oder ähnlichen versehen sind.

Bei dieser Vorgehensweise hat es sich überraschend gezeigt, daß durch die genannten Merkmale kaum Fließmarkierungen auftreten, die ansonsten beim Gasinnendruckverfahren zu befürchten und zu beobachten sind. Dies wird auf die vergleichbare Viskosität der flüssigen Schmelze mit der eingespritzten Flüssigkeit hoher Wärmekapazität zurückgeführt.

Gemäß einer ersten Weiterbildung ist vorgesehen, daß während des obigen Verfahrensschrittes b) ein Teil des noch schmelzflüssigen Kunststoffmaterials aus der Kavität in eine entformbare Nebenkavität verdrängt wird. Der Fluß von Kunststoffmaterial von der Kavität in die Nebenkavität wird dabei bevorzugt durch Ventilmittel gesteuert, die gemäß zeitlicher Vorgabe geöffnet bzw. geschlossen werden. Damit ist eine gezielte Beeinflussung des Überfließens der Schmelze von der Haupt- zu der Nebenkavität möglich. Weiterhin ist es denkbar, mehrere Nebenkavitäten, die unabhängig von einander gesteuert werden, einzusetzen.

Die Flüssigkeit kann entlang des Schmelzefließweges durch den Angußbereich direkt oder über die Maschinendüse, über die die Kunststoffschmelze zugeführt wird, in die Kavität eingespritzt werden oder alternativ dazu direkt mittels einer Einspritzdüse in die Kavität, wobei bei dem Erfordernis, mehrere Hohlräume zu bilden, für jeden Hohlraum eine separate Einspritzdüse vorgesehen ist.

Im zweiten Falle kann es vorteilhaft sein, wenn ein Teil des sich in der Kavität befindlichen Kunststoffmaterials während des obigen Schrittes b) durch die eingespritzte Flüssigkeit in Richtung auf die Einspritzeinheit zu aus der Kavität wieder heraus zurückgetrieben wird.

Eine weitere Verbesserung des Fließverhaltens der Schmelze bzw. der Steuerung dieses Verhaltens ergibt sich, wenn vor dem Einspritzen der thermoplastischen Kunststoffschmelze in der Kavität ein gegenüber dem Umgebungsdruck erhöhter Druck durch Einbringen eines Gases aufgebaut wird. Dieser Gasdruck kann während des obigen Schrittes a) in Abhängigkeit davon gesteuert und/oder geregelt werden, wie der Einspritzdruck der Schmelze während deren Einspritzung zunimmt. Vorzugsweise wird der Gasdruck nach einem vorbestimmten Druck- oder Zeitprofil gefahren. Er kann also allmählich, aber auch plötzlich, abgebaut werden.

Als eine besonders vorteilhafte Ausgestaltung hat es sich erwiesen, daß die Flüssigkeit vor dem Einspritzen in das noch schmelzflüssige Kunststoffmaterial temperiert wird. Hier ist namentlich daran gedacht, daß die Flüssigkeit auf einen vorgegebenen Temperaturbereich gekühlt wird. Als besonders vorteilhaft wird dabei ein Temperaturbereich zwischen -20°C und +20°C, vorzugsweise zwischen 4°C und 15°C, vorgesehen. Es kann aber auch erforderlich sein, beispielsweise bei Materialien, die durch eine schockartige Abkühlung geschädigt werden, die Flüssigkeit auf einen vorgegebenen Temperaturbereich zu erwärmen. Als besonders vorteilhaft wird dabei ein Temperaturbereich zwischen 20°C und 150°C, vorzugsweise zwischen 40°C und 100°C, vorgesehen. Bei den oben angegebenen Temperaturbereichen wurde in erster Linie an den Einsatz von Wasser gedacht. Es ist aber auch denkbar, zum Beispiel verflüssigte Gase wie Kohlendioxid oder Stickstoff einzusetzen, um den Kühleffekt besonders zu verstärken. Beim Einsatz derartiger Flüssigkeiten bietet sich ein Temperaturbereich zwischen -150°C bis -20°C an, wobei der Bereich von -60°C bis -40°C bevorzugt wird. Da die Flüssigkeit unter erhöhtem Druck in die Schmelze eingegeben wird, wird erreicht, daß die Siedetemperatur erhöht wird, so daß das Fluid flüssig eingegeben werden kann.

Bei dem erfindungsgemäßen Konzept kommt der Entfernung der eingespritzten Flüssigkeit - möglichst noch in der Spritzgießvorrichtung - eine besondere Bedeutung zu. Es bestehen hier erfindungsgemäß mehrere Möglichkeiten.

Zunächst kann vorgesehen werden, daß nach dem Abkühlenlassen und vor der Entformung folgender Verfahrensschritt ausgeführt wird:
c') Einpressen von Druckgas, vorzugsweise Druckluft, entlang des Weges, über den die Flüssigkeit in das Kunststoffmaterial eingespritzt wurde, und Ausblasen der gegebenenfalls noch im Formteilinneren verbliebenen restlichen Flüssigkeit aus dem Hohlraum des Formteils an mindestens einer Ausblasstelle, die sich an einer Stelle befindet, die von der Eingabestelle der Flüssigkeit entfernt ist.

Die Ausblasstelle wird bevorzugt im Bereich des Fließwegendes des Kunststoffmaterials angeordnet.

Alternativ dazu kann vorgesehen werden, daß zu dem genannten Zeitpunkt folgender Verfahrensschritt ausgeführt wird:
c") Einpressen von Druckgas, vorzugsweise Druckluft, an einer Gaseingabestelle, die von der Stelle entfernt ist, an der die Flüssigkeit in das Kunststoffmaterial eingespritzt wurde, und Ausblasen der gegebenenfalls noch im Formteilinneren verbliebenen restlichen Flüssigkeit aus dem Hohlraum des Formteils über die Stelle, an der die Flüssigkeit in das Kunststoffmaterial eingespritzt wurde.

Hierbei kann vorgesehen werden, Mittel einzusetzen, die über eine geeignete Umschaltvorrichtung die Flüssigkeit und/oder das Druckgas über den gleichen Medienweg eingeben und wieder ablassen.

Neben dem Ausblasen der Flüssigkeit aus dem Hohlraum kommt auch ein Absaugen der Flüssigkeit in Frage. Dann ist vorgesehen, daß folgender Verfahrensschritt ausgeführt wird:
c"') Anlegen eines Vakuums an einer fluidisch mit dem flüssigkeitsgefüllten Hohlraum in Verbindung stehenden Stelle, um die gegebenenfalls noch verbliebene restliche Flüssigkeit aus dem Hohlraum abzusaugen.

Dabei wird vorteilhafter Weise das Vakuum an die Einspritzdüse für Flüssigkeit angelegt. Um sicherzustellen, daß durch das Vakuum das Formteil nicht in sich zusammengezogen wird, kann vor oder während dem Anlegen des Vakuums eine Belüftungsöffnung geschaffen werden.

Als eine weitere vorteilhafte Weiterbildung kann das Spritzgießwerkzeug so ausgebildet werden, daß die Kavität bzw. das Volumen der das Formteil bildenden Kavität vor, während oder nach dem Schritt b), also der Eingabe des Fluids in das noch schmelzflüssige Kunststoffmaterial, vergrößert wird. Diese Ausgestaltung eines Spritzgießwerkzeuges wird allgemein als atmendes Werkzeug bezeichnet.

Nachdem der Hohlraum druckentlastet bzw. die eventuell verbliebene Restflüssigkeit aus dem Hohlraum entfernt wurde, können die Öffnung(en) zum Hohlraum durch Nachspritzen von Schmelze versiegelt werden.

Als Flüssigkeit mit hoher Wärmekapazität kommt bevorzugt Wasser in Frage. Es ist aber auch denkbar, flüssiges Kohlendioxid oder flüssigen Stickstoff oder Alkoholika einzusetzen. Auch der Einsatz von Gemischen, wie beispielsweise von Wasser und niedrig siedenden Flüssigkeiten, wie Alkohol, wird für das erfindungsgemäße Verfahren vorgeschlagen. Weitere vorteilhafte Weiterbildungen sind durch die Unteransprüche gekennzeichnet.

In der Zeichnung ist ein Ausführungsbeispiel der Erfindung dargestellt. Die Figuren zeigen:
- Fig. 1: den schematischen Schnitt durch eine Spritzgießvorrichtung;
- Fig. 2: den schematischen Schnitt durch ein Spritzgießwerkzeug mit Nebenkavität;
- Fig. 3: denselben Schnitt wie in Fig. 2, jedoch ohne Nebenkavität;
- Fig. 4: einen Ausschnitt durch den Einspritzbereich für Schmelze und Flüssigkeit.

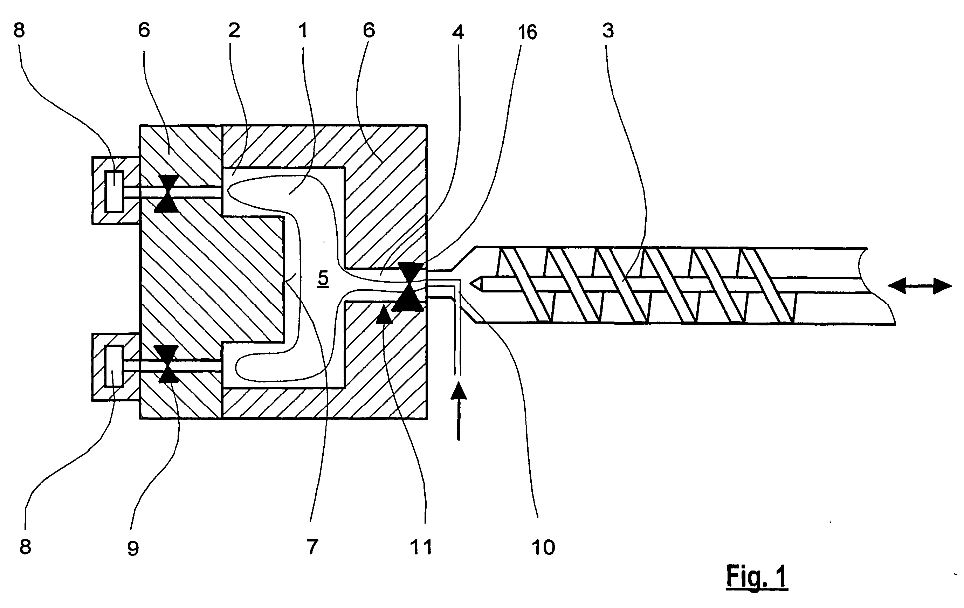

In Fig. 1 ist eine Spritzgießvorrichtung zu sehen, die eine Einspritzeinheit 3 aufweist, die in üblicher Weise Kunststoffschmelze erzeugt und in ein Spritzgießwerkzeug 6 einspritzt. Das Werkzeug 6 hat eine Kavität 5 mit einer Kavitätswand 7. Die Kunststoffschmelze wird dabei entlang eines Schmelzefließweges 4 durch eine Maschinendüse von der Einspritzeinheit 3 in das Werkzeug 6 gespritzt.

Das herzustellende Formteil 2 hat dabei einen Hohlraum 1, der zum einen das Teil leichter macht und weniger Materialeinsatz fordert, der es zum anderen ermöglicht, daß während des Abkühlens der Schmelze in der Kavität 5 diese gegen die Kavitätswand 7 gepreßt wird. Die produzierten Formteile 2 haben daher eine besonders gute Oberflächenqualität.

Es kann vorgesehen werden, daß während des Einspitzens der Schmelze in die Kavität 5 und/oder während der Eingabe des Fluids ein Teil der Schmelze in eine Überlaufkavität 8 überströmt. Das Überströmen kann durch Ventilmittel 9 gesteuert bzw. geregelt werden.

Das Einspritzen des Fluids erfolgt vorwiegend über die Einspritzdüse 10. Wie zu sehen ist, breitet sich das Fluid daher entlang des Schmelzefließweges 4 in Richtung der Kavität 5 aus.

Als Fluid kommt erfindungsgemäß eine Flüssigkeit mit hoher Wärmekapazität zum Einsatz. Das führt zu einer sehr kurzen Zykluszeit, da die Flüssigkeit viel Wärme von der Kunststoffschmelze aufnehmen kann. Diese erstarrt daher in kurzer Zeit, weshalb der Entformungsprozeß - verglichen mit bekannten Verfahren - früher starten kann.

Die Kavität 5 wird vor dem Einspritzen der Flüssigkeit vollständig oder teilweise, beispielsweise zu 80%, gefüllt. Dann wird die Flüssigkeit, vorzugsweise Wasser, eingespritzt. Nach dem Einspritzen der Flüssigkeit werden die Absperrmittel 16 geschlossen, es können hier gesteuerte Ventile, Schieber oder ähnliches eingesetzt werden, damit weder Schmelze noch Flüssigkeit aus der Kavität entweichen kann. Die vorwiegend kalte Flüssigkeit entzieht der Kunststoffschmelze Wärme und beschleunigt somit den Erstarrungsprozeß. Es ist hierbei vorgesehen, daß die Flüssigkeit soviel Wärme aufnimmt, daß sie vorzugsweise vollständig vom flüssigen in den gasförmigen Zustand übergeht. Die hierbei entstehende Volumenvergrößerung (von Flüssigkeit zu Gas) kommt zusätzlich positiv zur Auswirkung, da der Formteilinnendruck erhöht wird und somit der Kunststoff noch stärker an die Kavitätswandung gepreßt wird.

Durch eine Temperierung der Flüssigkeit, namentlich durch eine Kühlung auf einen Wert zwischen 4 °C und 15 °C, kann erreicht werden, daß eine sehr schnelle Aushärtung der Kunststoffschmelze erfolgt, wobei es ausreicht, das Kunststoffmaterial derart zu kühlen, daß es selbsttragend ist.

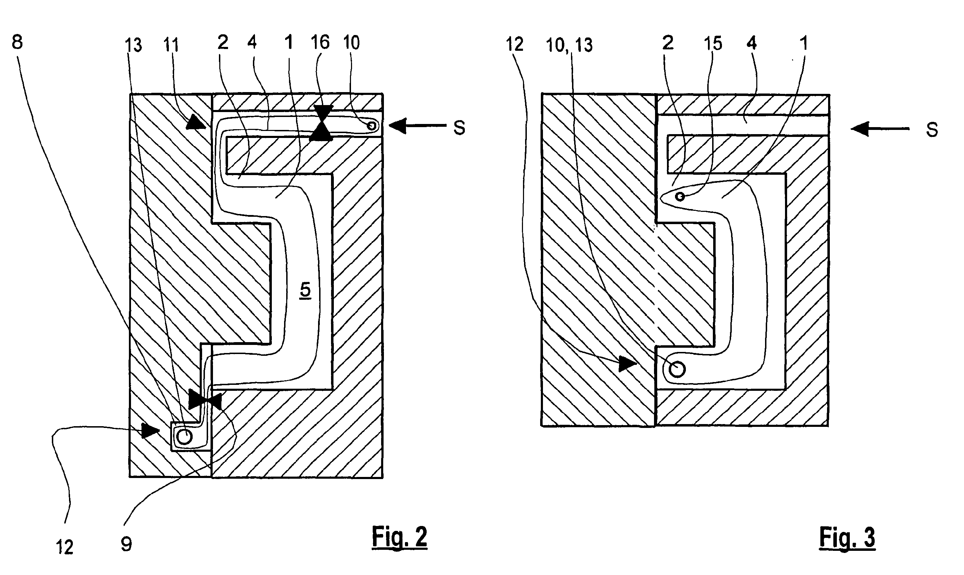

In Fig. 1 ist zu sehen, daß die Eingabe der Flüssigkeit entlang des Schmelzefließweges 4 im Bereich des Angusses 11 erfolgt. Die detailliertere Ausgestaltung des Bereichs des Spritzgießwerkzeugs ist in den Figuren 2 und 3 wiedergegeben.

Wie in Fig. 2 zu sehen ist, wird Schmelze S im Angußbereich 11 in die Kavität 5 injiziert. Über die Einspritzdüse für Flüssigkeit 10 wird beispielsweise Wasser eingegeben. Die verdrängte Schmelze strömt, wie es bereits oben erwähnt wurde, am Fließwegende von der Hauptkavität 5 in die Nebenkavität 8, wobei mittels Ventilmitteln 9 das Überströmen geregelt wird. Nach dem zumindest teilweise erfolgten Aushärten muß das Formteilinnere wieder druckentlastet werden und gegebenenfalls verbliebene restliche Flüssigkeit, die den Hohlraum 1 füllt, aus diesem wieder entfernt werden, dies kann beispielsweise über die Ausblasdüse 13 erfolgen. Um vorhandene Restflüssigkeit aus dem Hohlraum 1 zu entfernen, werden die Absperrmittel 16 wieder geöffnet und Druckluft in die Einspritzdüse für Flüssigkeit 10 eingeleitet.

Wie der Figur 2 zu entnehmen ist, erstreckt sich der Hohlraum 1 über die Kavität 5 hinaus in die Nebenkavität, was durch die Eingabe von Flüssigkeit in die Schmelze bewerkstelligt wurde. Im Bereich der Überlaufkavität 8, nämlich an der Ausblasstelle 12 für Flüssigkeit, ist eine Ausblasdüse 13 positioniert. Durch die Druckluftinjektion durch die Düse 10 kann verbliebene Flüssigkeit aus dem Hohlraum 1 ausgeblasen werden. Sie wird durch die Ausblasdüse 13 ausgetrieben. Dabei kann - unterstützender Weise - an die Ausblasdüse 13 ein Vakuum angelegt werden. Die Ausblasdüse 13 kann auch am Ende der Hauptkavität 5 angeordnet werden.

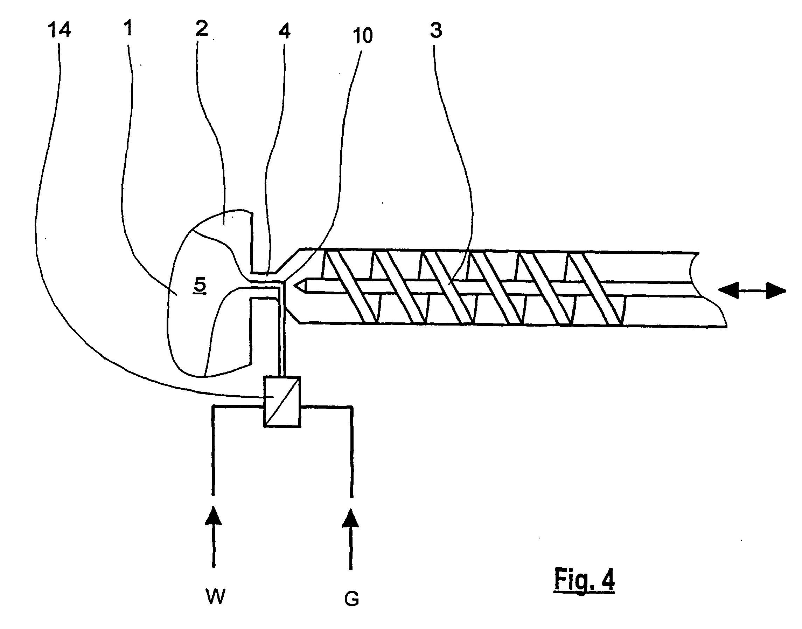

In Figur 3 ist ein anderes Verfahren der Erfindung dargestellt. Die vollständig mit Schmelze gefüllte Kavität wird über die Einspritzdüse für Flüssigkeit 10, die am Ende der Kavität angeordnet ist, mit Flüssigkeit beaufschlagt. Die so verdrängte Schmelze wird entgegen ihrer Fließrichtung über den Schmelzefließweg 4 zurückgedrückt und zwar so weit, daß die Gaseingabestelle 15 in den gebildeten Hohlraum 1 hinein ragen kann. Anschließend werden sämtliche Öffnungen geschlossen, so daß weder Schmelze noch Flüssigkeit zu- oder abgeführt werden kann. Wie bereits oben beschrieben, erfolgt nun der Wärmeübergang von der Schmelze auf die Flüssigkeit, bis diese den Aggregatzustand zumindestens teilweise geändert hat. Eine Druckentlastung erfolgt im Anschluß über die Düsen 10 oder 13. Um eventuell verbliebene Restflüssigkeit aus dem Hohlraum 1 zu entfernen, wird dieser mit Druckgas beaufschlagt, um die Flüssigkeit über die Ausblasstelle für Flüssigkeit 13 aus dem Hohlraum zu entfernen. Hierbei ist vorgesehen, eine Düse wie in Figur 4 beschrieben einzusetzen. Das Verfahren ist aber auch einsetzbar, ohne die Schmelze zurückzudrücken, hierbei ist lediglich darauf zu achten, daß die Gaseingabestelle 15 so positioniert wird, daß sichergestellt ist, daß diese wie oben beschrieben in den Hohlraum 1 hinein ragen kann, da beim reinen Volumenausgleich dieser wesentlich kleiner sein wird.

In Fig. 4 ist zu sehen, daß sich vorrichtungstechnisch eine besonders vorteilhafte Ausgestaltung ergibt, wenn ein Einspritzelement 14 verwendet wird, durch das wahlweise Flüssigkeit (Wasser) W bzw. Druckluft (Gas) G eingespritzt werden kann. In Fig. 4 reicht die Einspritzdüse 10 für Flüssigkeit und Gas zwar in den Bereich des Schmelzefließweges 4 von der Einspritzeinheit 3 in die Werkzeugkavität. Allerdings ist es genauso möglich, das kombinierte Einspritzelement 14 für Flüssigkeit und Gas so anzuordnen, daß es über die entsprechende Düse Flüssigkeit bzw. Gas direkt in die Kavität des Werkzeugs einspritzt.

Das vorstehend beschriebene Verfahren läßt sich vorteilhaft auch für sonst übliche Spritzgießverfahren einsetzten. Beispielsweise kann es auch gut eingesetzt werden, wenn das Formteil aus mehr als einer Kunststoffkomponente gespritzt wird (2-K-Verfahren).

Weiterhin ist es beispielsweise möglich, die Flüssigkeit an zwei Stellen ins Werkzeug zu injizieren, damit zwei Medienblasen zu erzeugen und diese durch entsprechende Drucksteuerung zu veranlassen, miteinander zu verschmelzen. Diese Technologie ist als solche bekannt.

Die Eingabe der Flüssigkeit kann weiterhin auch in den Angußverteiler erfolgen, wodurch mehrere Teilkavitäten mit Flüssigkeit versorgt werden können.

### Bezugszeichenliste:

- 1: Hohlraum
- 2: Formteil
- 3: Einspritzeinheit
- 4: Schmelzefließweg
- 5: Kavität
- 6: Spritzgießwerkzeug
- 7: Wandungen der Kavität
- 8: Nebenkavität
- 9: Ventilmittel
- 10: Einspritzdüse für Flüssigkeit
- 11: Angußbereich
- 12: Ausblasstelle für Flüssigkeit
- 13: Ausblasdüse
- 14: Einspritzelement
- 15: Gaseingabestelle
- 16: Absperrmittel für Flüssigkeit und/oder Schmelze

- S: Schmelze
- W: Flüssigkeit (Wasser)
- G: Gas

## Patentansprüche

1. Verfahren zum Spritzgießen von mindestens einen Hohlraum (1) aufweisenden Formteilen (2) aus Kunststoffmaterial, das die Schritte aufweist:
a) Einspritzen von Kunststoffschmelze von einer Einspritzeinheit (3) entlang eines Schmelzefließweges (4) in die Kavität (5) eines Spritzgießwerkzeugs (6);
b) Einspritzen einer Flüssigkeit in das noch schmelzflüssige Kunststoffmaterial, so daß dieses an die Wandungen (7) der Kavität (5) gepreßt wird ;
c) Verfestigenlassen des Kunststoffmaterials, bis dieses selbsttragend das Formteil (2) bildet;
d) Entformen des Fonnteils (2) aus der Kavität (5) des Spritzgießwerkzeugs (6);
wobei
nach dem Einspritzen der Kunststoffschmelze gemäß Schritt a) und nach dem Einspritzen der Flüssigkeit, insbesondere einer Flüssigkeit mit hoher Wärmekapazität, gemäß Schritt b) ein Verschließen sowohl des Schmelzefließweges (4) als auch des Fließweges, über den die Flüssigkeit eingespritzt wird, erfolgt,
und das Entformen gemäß Schritt d) erst dann erfolgt, wenn die eingespritzte Flüssigkeit zumindest teilweise in den gasförmigen
Aggregatzustand übergegangen ist,
und vorzugsweise unmittelbar, vor dem Entformen gemäß Schritt d) eine Druckentlastung des Formteilinneren erfolgt,
**dadurch gekennzeichnet, daß** nach dem Schritt b) die Formkavität vollständing durch die Flüssigkeit und die Kunststoffschmelze gefüllt ist.

2. Verfahren nach Anspruch 1, **dadurch gekennzeichnet, daß** während des Verfahrensschrittes b) gemäß Anspruch 1 ein Teil des noch schmelzflüssigen Kunststoffmaterials aus der Kavität (5) in eine entformbare Nebenkavität (8) verdrängt wird.

3. Verfahren nach Anspruch 2, **dadurch gekennzeichnet, daß** der Fluß von Kunststoffmaterial von der Kavität (5) in die Nebenkavität (8) durch Ventilmittel (9) gesteuert wird, die gemäß zeitlicher Vorgabe geöffnet bzw. geschlossen werden.

4. Verfahren nach einem der Ansprüche 1 bis 3, **dadurch gekennzeichnet, daß** die Flüssigkeit entlang des Schmelzefließweges (4) durch den Angußbereich (11) oder direkt mittels einer Einspritzdüse (10) in die Kavität (5) eingespritzt wird.

5. Verfahren nach Anspruch 4, **dadurch gekennzeichnet, daß** ein Teil des sich in der Kavität (5) befindlichen Kunststoffmaterials während Schritt b) gemäß Anspruch 1 durch die eingespritzte Flüssigkeit in Richtung auf die Einspritzeinheit (3) zu aus der Kavität (5) heraus zurückgetrieben wird.

6. Verfahren nach einem der Ansprüche 1 bis 5, **dadurch gekennzeichnet, daß** vor dem Einspritzen der Kunststoffschmelze nach Schritt a) gemäß Anspruch 1 in der Kavität (5) ein gegenüber dem Umgebungsdruck erhöhter Druck durch Einbringen eines Gases aufgebaut wird.

7. Verfahren nach Anspruch 6, **dadurch gekennzeichnet, daß** der Gasdruck während des Schrittes b) gemäß Anspruch 1 allmählich oder plötzlich abgebaut wird.

8. Verfahren nach einem der Ansprüche 1 bis 7, **dadurch gekennzeichnet, daß** die Flüssigkeit vor dem Einspritzen in das noch schmelzflüssige Kunststoffmaterial nach Schritt a) gemäß Anspruch 1 temperiert wird.

9. Verfahren nach Anspruch 8, **dadurch gekennzeichnet, daß** die Flüssigkeit auf einen vorgegebenen Temperaturbereich gekühlt wird.

10. Verfahren nach einem der Ansprüche 1 bis 9, **dadurch gekennzeichnet, daß** nach Schritt c) und unmittelbar vor Schritt d) gemäß Anspruch 1 folgender Verfahrensschritt ausgeführt wird:
c') Einpressen von Druckgas, vorzugsweise Druckluft, entlang des Weges, über den die Flüssigkeit in das Kunststoffmaterial eingespritzt wurde, und Ausblasen der gegebenenfalls noch im Formteilinneren verbliebenen restlichen Flüssigkeit aus dem Hohlraum (1) des Formteils (2) an mindestens einer Ausblasstelle (12), die sich an einer Stelle befindet, die von der Eingabestelle der Flüssigkeit entfernt ist.

11. Verfahren nach einem der Ansprüche 1 bis 9, **dadurch gekennzeichnet, daß** nach Schritt c) und unmittelbar vor Schritt d) gemäß Anspruch 1 folgender Verfahrensschritt ausgeführt wird:
c") Einpressen von Druckgas, vorzugsweise Druckluft, an einer Gaseingabestelle, die von der Stelle entfernt ist, an der die Flüssigkeit in das Kunststoffmaterial eingespritzt wurde, und Ausblasen der gegebenenfalls noch im Formteilinneren verbliebenen restlichen Flüssigkeit aus dem Hohlraum (1) des Formteils (2) über die Stelle, an der die Flüssigkeit in das Kunststoffmaterial eingespritzt wurde.

12. Verfahren nach einem der Ansprüche 1 bis 9, **dadurch gekennzeichnet, daß** nach Schritt c) und unmittelbar vor Schritt d) gemäß Anspruch 1 folgender Verfahrensschritt ausgeführt wird:
c"') Anlegen eines Vakuums an einer fluidisch mit dem flüssigkeitsgefüllten Hohlraum (1) in Verbindung stehenden Stelle, um die sich im Hohlraum (1) gegebenenfalls noch verbliebene restliche Flüssigkeit aus dem Hohlraum (1) abzusaugen.

13. Verfahren nach Anspruch 12, **dadurch gekennzeichnet, daß** das Vakuum an der Einspritzdüse (10) für Flüssigkeit angelegt wird.

14. Verfahren nach einem der Ansprüche 1 bis 13, **dadurch gekennzeichnet, daß** als Flüssigkeit Wasser eingesetzt wird.

15. Verfahren nach einem der Ansprüche 1 bis 13, **dadurch gekennzeichnet, daß** als Flüssigkeit ein Gemisch aus Wasser mit niedrig siedenden Flüssigkeiten, wie beispielsweise Alkohol, eingesetzt wird.

16. Verfahren nach einem der Ansprüche 1 bis 15, **dadurch gekennzeichnet, daß** die Druckentlastung des Formteilinneren durch Einbringung einer Entlüftungsöffnung, vorzugsweise durch Einbringung einer Bohrung, erfolgt.

## Claims

1. Process for injection-moulding of mouldings (2) made from plastic material having at least one cavity (1), which has the steps:
a) injection of plastic melt from an injection unit (3) along a melt flow path (4) into the cavity (5) of an injection-moulding die (6);
b) injection of a liquid into the still molten plastic material, so that the latter is pressed against the walls (7) of the cavity (5);
c) allowing the plastic material to solidify until the latter forms the moulding (2) in self-supporting manner;
d) releasing the moulding (2) from the cavity (5) of the injection-moulding die (6);
wherein
after injecting the plastic melt according to step a) and after injecting the liquid, in particular a liquid having high thermal capacity, according to step b), closing both of the melt flow path (4) and of the flow path, over which the liquid is injected, takes place,
and releasing according to step d) only takes place when the injected liquid has changed at least partly into the gaseous physical state,
and preferably immediately, before releasing according to step d), relieving of pressure of the moulding interior takes place,
**characterised in that** after step b), the mould cavity is completely filled by the liquid and the plastic melt.

2. Process according to claim 1, **characterised in that** during process step b) according to claim 1, some of the still molten plastic material is expelled from the cavity (5) into a releasable side cavity (8).

3. Process according to claim 2, **characterised in that** the flow of plastic material from the cavity (5) into the side cavity (8) is controlled by valve means (9), which are opened or closed according to temporal presetting.

4. Process according to one of claims 1 to 3, **characterised in that** the liquid is injected into the cavity (5) along the melt flow path (4) through the sprue region (11) or directly by means of an injection nozzle (10).

5. Process according to claim 4, **characterised in that** some of the plastic material situated in the cavity (5) is driven back out of the cavity (5) during step b) according to claim 1 by the injected liquid in the direction of the injection unit (3).

6. Process according to one of claims 1 to 5, **characterised in that** before injection of the plastic melt according to step a) according to claim 1 in the cavity (5), a pressure which is increased with respect to the ambient pressure is built up by introducing a gas.

7. Process according to claim 6, **characterised in that** the gas pressure during step b) according to claim 1 is reduced gradually or suddenly.

8. Process according to one of claims 1 to 7, **characterised in that** the liquid is tempered before injection into the still molten plastic material according to step a) according to claim 1.

9. Process according to claim 8, **characterised in that** the liquid is cooled to a preset temperature range.

10. Process according to one of claims 1 to 9, **characterised in that** after step c) and immediately before step d) according to claim 1, the following process step is executed:
c') injecting compressed gas, preferably compressed air, along the path, over which the liquid was injected into the plastic material, and blowing-out of the residual liquid optionally still remaining in the moulding interior from the cavity (1) of the moulding (2) at at least one blowing-out point (12), which is situated at a point which is remote from the input point of the liquid.

11. Process according to one of claims 1 to 9, **characterised in that** after step c) and immediately before step d) according to claim 1, the following process step is executed:
c") injecting compressed gas, preferably compressed air, at a gas input point, which is remote from the point at which the liquid was injected into the plastic material, and blowing-out of the residual liquid optionally still remaining in the moulding interior from the cavity (1) of the moulding (2) via the point at which the liquid was injected into the plastic material.

12. Process according to one of claims 1 to 9, **characterised in that** after step c) and immediately before step d) according to claim 1, the following process step is executed:
c"') applying a vacuum at a point in fluid connection with the liquid-filled cavity (1) in order to withdraw from the cavity (1) the residual liquid optionally still remaining in the cavity (1).

13. Process according to claim 12, **characterised in that** the vacuum is applied to the injection nozzle (10) for liquid.

14. Process according to one of claims 1 to 13, **characterised in that** water is used as liquid.

15. Process according to one of claims 1 to 13, **characterised in that** a mixture of water with low-boiling liquids, such as for example alcohol, is used as liquid.

16. Process according to one of claims 1 to 15, **characterised in that** the relieving of pressure of the moulding interior takes place by introducing a ventilation opening, preferably by introducing a bore.

## Revendications

1. Procédé de moulage par injection de pièces moulées (2) en matière plastique présentant au moins une partie creuse (1), présentant les étapes suivantes :
a) injection de matière plastique en fusion par une unité d'injection (3) le long d'une trajectoire d'écoulement de matière en fusion (4) dans la cavité (5) d'un outil de moulage par injection (6) ;
b) injection d'un liquide dans la matière plastique en fusion encore fluide, de sorte qu'elle soit pressée contre les parois (7) de la cavité (5) ;
c) solidification de la matière plastique jusqu'à ce qu'elle forme la pièce moulée (2) auto-portante ;
d) démoulage de la pièce moulée (2) de la cavité (5) de l'outil de moulage par injection (6) ;
après l'injection de matière plastique en fusion selon l'étape a) et après l'injection du liquide, notamment d'un liquide ayant une capacité thermique élevée, selon l'étape b), une fermeture de la trajectoire d'écoulement de matière en fusion (4) ainsi que de la trajectoire d'écoulement par laquelle le liquide est injecté, étant effectuée,
et le démoulage selon l'étape d) s'effectuant seulement une fois que le liquide injecté est au moins partiellement passé dans l'état gazeux,
et de préférence directement avant le démoulage selon l'étape d), une décharge de pression étant effectuée à l'intérieur de la pièce moulée,
**caractérisé en ce qu'**après l'étape b), la cavité du moule est complètement remplie avec le liquide et la matière plastique en fusion.

2. Procédé selon la revendication 1, **caractérisé en ce que** pendant l'étape de procédé b) selon la revendication 1, une partie de la matière plastique en fusion encore fluide est poussée hors de la cavité (5) dans une cavité secondaire démoulable (8).

3. Procédé selon la revendication 2, **caractérisé en ce que** le flux de matière plastique de la cavité (5) dans la cavité secondaire (8) est commandé par des moyens de soupape (9) qui sont ouverts ou fermés en fonction de données préalables temporelles.

4. Procédé selon l'une quelconque des revendications 1 à 3, **caractérisé en ce que** le liquide est injecté le long de la trajectoire d'écoulement de la matière en fusion (4) à travers la zone de carotte (11) ou directement au moyen d'une buse d'injection (10) dans la cavité (5).

5. Procédé selon la revendication 4, **caractérisé en ce qu'**une partie de la matière plastique se trouvant dans la cavité (5) pendant l'étape b) selon la revendication 1 est ressortie de la cavité (5) dans la direction de l'unité d'injection (3) par le liquide injecté.

6. Procédé selon l'une quelconque des revendications 1 à 5, **caractérisé en ce qu'**avant l'injection de la matière plastique en fusion après l'étape a) selon la revendication 1, une pression accrue par rapport à la pression environnante est appliquée par l'introduction d'un gaz dans la cavité (5).

7. Procédé selon la revendication 6, **caractérisé en ce que** la pression de gaz pendant l'étape b) selon la revendication 1 est diminuée progressivement ou brutalement.

8. Procédé selon l'une quelconque des revendications 1 à 7, **caractérisé en ce que** le liquide est mis en température avant l'injection dans la matière plastique en fusion encore fluide après l'étape a) selon la revendication 1.

9. Procédé selon la revendication 8, **caractérisé en ce que** le liquide est refroidi jusqu'à une plage de température prédéfinie.

10. Procédé selon l'une quelconque des revendications 1 à 9, **caractérisé en ce qu'**après l'étape c) et immédiatement avant l'étape d) selon la revendication 1, on met en oeuvre l'étape de procédé suivante :
c') injection de gaz sous pression, de préférence d'air sous pression, le long de la trajectoire par laquelle le liquide a été injecté dans la matière plastique, et évacuation par soufflage du liquide résiduel encore éventuellement présent à l'intérieur de la pièce moulée hors de la partie creuse (1) de la pièce moulée (2) au niveau d'au moins un point de soufflage (12) qui se trouve à un endroit éloigné du point d'entrée du liquide.

11. Procédé selon l'une quelconque des revendications 1 à 9, **caractérisé en ce qu'**après l'étape c) et immédiatement avant l'étape d) selon la revendication 1, on met en oeuvre l'étape de procédé suivante :
c") injection de gaz sous pression, de préférence d'air sous pression, en un endroit d'entrée de gaz qui est éloigné de l'endroit auquel le liquide a été injecté dans la matière plastique, et évacuation par soufflage du liquide résiduel encore éventuellement présent à l'intérieur de la pièce moulée hors de la partie creuse (1) de la pièce moulée (2) par l'endroit auquel le liquide a été injecté dans la matière plastique.

12. Procédé selon l'une quelconque des revendications 1 à 9, **caractérisé en ce qu'**après l'étape c) et immédiatement avant l'étape d) selon la revendication 1, on met en oeuvre l'étape de procédé suivante :
c"') application d'un vide à un endroit en liaison fluidique avec la partie creuse (1) remplie de liquide afin d'aspirer hors de la partie creuse (1) le liquide résiduel encore éventuellement présent dans la partie creuse (1).

13. Procédé selon la revendication 12, **caractérisé en ce que** le vide est appliqué au niveau de la buse d'injection (10) de liquide.

14. Procédé selon l'une quelconque des revendications 1 à 13, **caractérisé en ce que** le liquide utilisé est de l'eau.

15. Procédé selon l'une quelconque des revendications 1 à 13, **caractérisé en ce que** le liquide utilisé est un mélange d'eau et de liquides à bas point d'ébullition, comme par exemple de l'alcool.

16. Procédé selon l'une quelconque des revendications 1 à 15, **caractérisé en ce que** la décharge de pression de l'intérieur de la pièce moulée s'effectue en pratiquant une ouverture de désaérage, de préférence en pratiquant un alésage.
